# EUROPÄISCHE PATENTSCHRIFT

(11) **EP 0 544 181 B1**
(45) Veröffentlichungstag und Bekanntmachung des Hinweises auf die Patenterteilung: **18.12.1996**
(21) Anmeldenummer: 92119669.7
(22) Anmeldetag: 19.11.1992
(51) Int. Cl.: G01N 1/06

(54) **Mikrotom**
Microtome
Microtome

(30) Priorität: 28.11.1991 DE 4139097; 21.02.1992 DE 4205256
(43) Veröffentlichungstag der Anmeldung: 02.06.1993
(73) Patentinhaber: MICROM LABORGERÄTE GmbH, D-69184 Walldorf (DE)
(72) Erfinder: Niesporek, Christian, W-6908 Wiesloch (DE); Heid, Hans, W-6919 Bammental (DE)
(74) Vertreter: LOUIS, PÖHLAU, LOHRENTZ & SEGETH

(56) Entgegenhaltungen:
- EP-A- 0 098 818
- DE-A- 3 500 596
- US-A- 1 925 181
- US-A- 3 667 330
- US-A- 4 691 151

## Beschreibung

Die Erfindung betrifft ein Mikrotom mit einer Probenhalterung für eine dünnzuschneidende Probe und mit einer Messerhalterung für ein Schneidmesser, wobei die Probenhalterung zur Duchführung einer Schnittbewegung relativ zur Messerhalterung in einer ersten Raumrichtung und zur Duchführung einer Grob- und einer Schnittdicken-Zustellbewegung in einer zur ersten Raumrichtung senkrechten zweiten Raumrichtung mittels einer elektrischen Antriebseinrichtung antreibbar ist und zur definierten Begrenzung der in der zweiten Raumrichtung erfolgenden Grob-Zustellbewegung der Probenhalterung eine Begrenzungseinrichtung vorgesehen ist, die über eine elektronische Steuerung mit der Antriebseinrichtung verbunden ist.

Derartige Mikrotomen können als Rotationsmikrotome oder als Schlittenmikrotome ausgebildet sein. Dabei kann die Schnittbewegung in der ersten Raumrichtung durch eine entsprechende Bewegung der Probenhalterung und/oder durch eine geeignete Bewegung der Messerhalterung erfolgen.

Zur Ausführung entsprechender Dünnschnitte ist es bei Arbeitsbeginn erforderlich, die Probenhalterung mit der dünnzuschneidenden Probe zur Messerhalterung bzw. zu dem an der Messerhalterung befindlichen Schneidmesser zuzustellen. Das geschieht durch eine sog. Grob-Zustellbewegung. Insbes. bei Mikrotomen mit einer elektrischen Antriebseinrichtung anstelle einer manuell zu betätigenden Antriebseinrichtung besteht bislang die Gefahr einer unkontrollierten Berührung zwischen der an der Probenhalterung befestigten dünnzuschneidenden Probe und der Schneidkante des an der Messerhalterung befestigten Schneidmessers. Hierdurch kann es nicht nur zu Beschädigungen der Schneidkante des Schneidmessers und/oder zu Beschädigungen der dünnzuschneidenden Probe sondern auch zu einer Beschädigung des gesamten Mikrotoms kommen.

Ein Mikrotom der eingangs genannten Art ist aus der US-A 4 691 151 bekannt. Bei diesem bekannten Mikrotom ist die zur definierten Begrenzung der Grob-Zustellbewegung der Probenhalterung vorgesehene Begrenzungseinrichtung von einem Schalter gebildet. Über die örtliche Lokalisierung dieses Begrenzungsschalters sind dort keine Angaben gemacht. Auch von einer speziellen Ausbildung dieses Schalters ist dort nicht die Rede.

Aus der US-A 3 667 330 ist ein Mikrotom bekannt, das ebenfalls mit einer Begrenzungseinrichtung versehen ist, die zur definierten Begrenzung der Zustellbewegung des Probenhalters dient. Diese Begrenzungseinrichtung ist wie die oben beschriebene Begrenzungseinrichtung von einem Schalter gebildet. Dieser Schalter ist an einer Basis des Mikrotoms befestigt, die in der Nachbarschaft des Schneidmessers vorgesehen ist.

Der Erfindung liegt die Aufgabe zugrunde, ein Mikrotom der eingangs genannten Art zu schaffen, bei welchem bei jedem Arbeitsbeginn zum Dünnschneiden einer entsprechenden Probe die Annäherung zwischen dünnzuschneidender Probe und Schneidmesser bei einfacher Gestaltung der Begrenzungseinrichtung ohne die Gefahr von Beschädigungen automatisch durchführbar ist.

Diese Aufgabe wird erfindungsgemäß dadurch gelöst, daß die Begrenzungseinrichtung in der Nachbarschaft des Messerhalters bzw. des Schneidmessers vorgesehen ist und einen Grundkörper aufweist, an dem eine Auslösefahne zwischen zwei Winkelendstellungen schwenkbeweglich gelagert ist, die zum Betätigen eines im Grundkörper angeordneten Schalters vorgesehen ist, der mit der elektronischen Steuerung verbunden ist, wobei in der vom Schneidmesser entfernten ersten Winkelendstellung mittels des Schalters über die elektronische Steuerung die Antriebseinrichtung zum Antrieb der Probenhalterung in der zweiten Raumrichtung aktiviert ist.

Die Begrenzungseinrichtung ist dazu vorgesehen, die Annäherung des Probenhalters mit der in ihr fixierten dünnzuschneidenden Probe an die Messerhalterung bzw. an das an der Messerhalterung befestigte Schneidmesser automatisch festzustellen und die Antriebseinrichtung mittels der zwischen der Begrenzungseinrichtung und der Antriebseinrichtung eingeschalteten elektronischen Steuerung rechtzeitig abzuschalten, so daß Beschädigungen der Messerschneide des Schneidmessers, der in der Probenhalterung festgelegten dünnzuschneiden Probe und des Mikrotoms insgesamt zuverlässig vermieden werden.

Die bei dem erfindungsgemäßen Mikrotom angewandte Begrenzungseinrichtung weist einen einfachen Aufbau auf und ist sehr betriebszuverlässig.

Zweckmäßigerweise ist die Auslösefahne derart justiert, daß bei Berührung der Auslösefahne mit der dünnzuschneidenden Dünnschnittprobe und bei Erreichen einer zwischen den beiden Winkelendstellungen vorgesehenen Winkel zwischenstellung, in welcher die Auslösefahne zur Schnittebene parallel orientiert bzw. in dieser angeordnet ist, der Schalter in eine zweite Schaltstellung umschaltet, in der über die elektronische Steuerung die Antriebseinrichtung deaktiviert ist. Die besagte Schnittebene ist durch die Schneidkante des Schneidmessers und die erste Raumrichtung definiert.

Hat die dünnzuschneidende Probe während der Zustellbewegung die Auslösefahne berührt, so wird die Auslösefahne mit Hilfe der dünnzuschneidenden Probe von der ersten Winkelendstellung in die zur Schnittebene parallele bzw. durch diese gegebene Winkelzwischenstellung verschwenkt und gleichzeitig die Antriebseinrichtung -wie erwähntdeaktiviert, was bedeutet, daß die Zustellbewegung automatisch abgebrochen wird.

Die Begrenzungseinrichtung benötigt nur einen sehr kleinen Raumbedarf, wenn der Schalter ein an sich bekannter elektrischer Mikroschalter ist. Nachdem der Schalter über die elektronische Steuerung mit der Antriebseinrichtung verbunden ist, kann der Schalter problemlos als elektrischer Mikroschalter ausgebildet sein, weil er nicht direkt die Antriebsleistung schalten muß.

Die Auslösefahne ist vorzugsweise mit einem im Grundkörper angeordneten Elektromagneten verbunden, der mit der elektronischen Steuerung zusammengeschaltet ist, wobei der Elektromagnet die Anschlußfahne bis zur Berührung zwischen Dünnschnittprobe und Auslösefahne in der ersten Winkelendstellung hält und in der Winkelzwischenstellung der Elektromagnet die Auslösefahne in die zweite Winkelendstellung umstellt, so daß die Auslösefahne am Rücken des Schneidmessers anliegt. Dadurch ist gewährleistet, daß dann nach der Grobzustellung bei der Durchführung von Dünnschnitten zwischen der dünnzuschneidenden Probe und der Auslösefahne der Begrenzungseinrichtung keine Berührung mehr stattfindet. Durch geeignete Anpassung der Auslösefahne an den Rücken des Schneidmessers ist es einfach möglich, zwischen dem Rücken des Schneidmessers und der Auslösefahnen einen ungewollten Spalt, zu vermeiden.

Als zweckmäßig hat es sich erwiesen, wenn nicht nur der Schalter ein elektrischer Mikroschalter ist, sondern wenn auch der Elektromagnet als Miniaturelektromagnet ausgebildet ist, weil auch hierdurch die Begrenzungseinrichtung sehr kompakt ausgebildet sein kann.

Die elektronische Steuerung ist vorzugsweise mit einem zum Erfassen einer Schnittbewegungsumkehr vorgesehenen und durch die Probenhalterung betätigbaren Endschalter zusammengeschaltet. Dieser Endschalter ist vorzugsweise derart angeordnet, daß er von der Probenhalterung in deren Umkehrposition vor der Durchführung einer Schnittbewegung betätigt wird.

Die Begrenzungseinrichtung ist vorzugsweise so angeordnet, daß sie von der dünnzuschneidenden Probe in ihrer Umkehrposition vor der Durchführung einer zur Schnittbewegung entgegengesetzten Rückstellbewegung betätigt wird.

Handelt es sich beim erfindungsgemäßen Mikrotom also z.B. um ein Rotationsmikrotom, so erfolgt die Grobzustellung der dünnzuschneidenden Probe in der unteren Umkehrposition des Probenhalters, d.h. in der Umkehrposition vor der Durchführung einer zur Schnittbewegung entgegengesetzten Rückstellbewegung. Hat die Begrenzungseinrichtung in dieser unteren Stellung des Probenhalters die Annäherung der Probe an die Begrenzungseinrichtung erfaßt und die Begrenzungseinrichtung die elektronische Steuerung mit dem entsprechenden Ausgangssignal beaufschlagt, so wird die Bewegung in der ersten Raumrichtung abgebrochen und es kann die Probenhalterung mit Hilfe der Antriebseinrichtung die entsprechende Rückstellbewegung in der zweiten Raumrichtung ausführen, bis die Probenhalterung in ihrer oberen Umkehrposition vor der Durchführung einer Schnittbewegung den in der oberen Position befindlichen Endschalter betätigt.

Weitere Einzelheiten, Merkmale und Vorteile werden nachfolgend an Hand eines in der Zeichnung schematisch dargestellten Ausführungsbeispieles der Begrenzungseinrichtung in Verbindung mit einer abschnittweise gezeichneten dünnzuschneidenden Probe, einem in einer abschnittweise gezeichneten Messerhalterung angeordneten Schneidmesser und weiteren Bauteilen des erfindungsgemäßen Mikrotoms erläutert. Es zeigen:
- Fig. 1: eine Seitenansicht der Begrenzungseinrichtung und weiterer Einzelheiten des Mikrotoms, und
- Fig. 2: eine Vorderansicht der Begrenzungseinrichtung in Blickrichtung des Pfeiles II in Fig. 1.

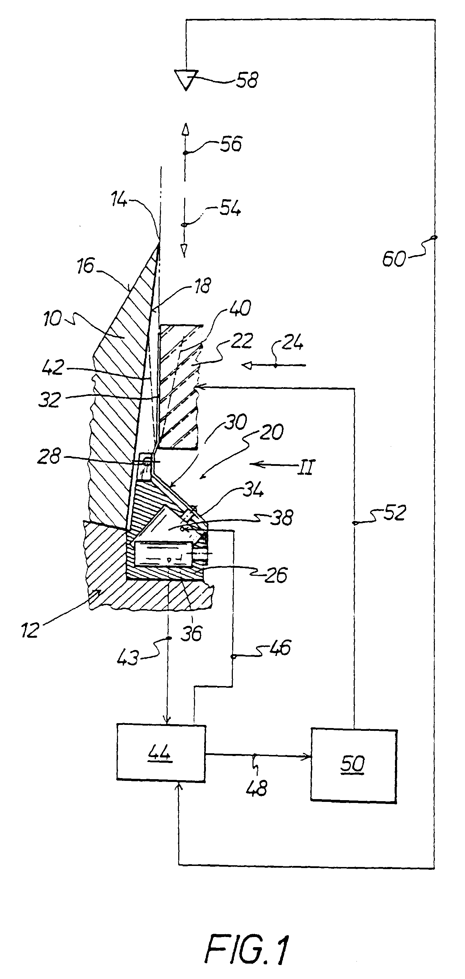

Fig. 1 zeigt Elemente eines Mikrotoms, insbes. eines Rotationsmikrotomes, wobei ein Schneidmesser 10 abschnittweise gezeichnet ist, das an einer abschnittweise angedeuteten Messerhalterung 12 befestigt ist. Das Schneidmesser 10 weist eine Messerschneide 14, eine Vorderfläche 16 und eine Rückenfläche 18 auf. An der Messerhalterung 12 bzw. an einem Abschnitt des Grundteiles des Mikrotoms ist in der Nachbarschaft des Schneidmessers 10 eine Begrenzungseinrichtung 20 angeordnet, die zur definierten Begrenzung der Zustellbewegung einer dünnzuschneidenden Probe 22 vorgesehen ist. Diese Zustellbewegung der Probe 22 ist durch den Pfeil 24 angedeutet.

Die Begrenzungseinrichtung 20 weist einen als Gehäuse ausgebildeten Grundkörper 26 auf, an welchem mittels einer Schwenkachse 28 eine Auslösefahne 30 schwenkbeweglich angeordnet ist. Die Auslösefahne 30 ist als zweiarmiger Hebel ausgebildet, wobei der eine Hebelarm 32 dem Schneidmesser 10 bzw. der Probe 22 und der zweite Hebelarm 34 einem elektrischen Schalter 36 und einem Elektromagneten 38 zugeordnet ist.

Die Auslösefahne 30 ist um die Schwenkachse 28 zwischen einer ersten Winkelendstellung 40 und einer zweiten Winkelendstellung 42 verschwenkbar, was in Fig. 1 durch strichlierte Linien angedeutet ist.

Der Schalter 36 und der Elektromagnet 38 sind mit einer schematisch als Block dargestellten elektronischen Steuerung 44 verbunden, was durch die Pfeile 44 und 46 angedeutet ist. Die elektronische Steuerung 44 ist mittels einer durch einen Pfeil 48 angedeuteten Verbindungsleitung mit einer elektrischen Antriebseinrichtung 50 verbunden, die wie die elektronische Steuerung 44 nur schematisch als Block gezeichnet ist. Die Antriebseinrichtung 50 dient zum Antrieb einer (nicht gezeichneten) Probenhalterung, an welcher die dünnzuschneidende Probe 22 fixiert ist. Dieser Antrieb ist durch die Pfeillinie 52 angedeutet. Mit Hilfe der Antriebseinrichtung 50 erfolgt nicht nur eine Grob- oder Fein-Zustellbewegung der dünnzuschneidenden Probe 22 in Richtung des Pfeiles 24 sondern außerdem auch eine Schnittbewegung in Richtung des Pfeiles 54 sowie nach Durchführung eines entsprechenden Schnittes eine Rückzugbewegung in Richtung des Pfeiles 56, die zur Schnittrichtung entgegengesetzt ist.

Ein in Fig. 1 schematisch durch eine Dreiecksspitze angedeuteter Endschalter 58 ist mit der elektronischen Steuerung 44 verbunden, was durch den Pfeil 60 angedeutet ist. Der Endschalter 58 ist derart angeordnet, daß er von der (nicht gezeichneten) Probenhalterung in deren oberer Umkehrposition vor der Durchführung einer Schnittbewegung in Richtung des Pfeiles 54 betätigt wird.

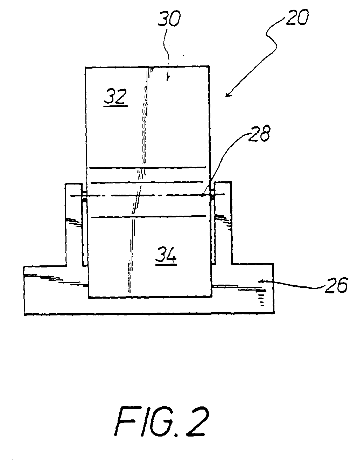

Fig. 2 zeigt in einer Vorderansicht die Auslösefahne 30 mit der Schwenkachse 28, um welche die Auslösefahne 30 relativ zum Grundkörper 26 der Begrenzungseinrichtung 20 verschwenkbar ist. Auch aus dieser Figur ist die zweiarmige Ausbildung der Auslösefahne 30 mit dem ersten Hebelarm 32 und dem zweiten Hebelarm 34 ersichtlich.

Die Wirkungsweise des erfindungsgemäßen Mikrotoms bzw. der dort zur Anwendung gelangenden Begrenzungseinrichtung 20 wird nachfolgend anhand eines Rotationsmikrotomes beschrieben, wobei es sich versteht, daß dieselbe Anordnung bei einem Schlittenmikrotom vorgesehen sein kann.

Beim Einrichten einer Probe 22 zur Durchführung von Dünnschnitten muß zunächst in der zweiten Raumrichtung (Pfeil 24) eine Grobzustellung der Probe 22 relativ zur Schneidkante 14 des Schneidmessers 10 durchgeführt werden. Das erfolgt mittels der elektrischen Antriebseinrichtung 50, mit der entweder die Probe 22 oder das Schneidmesser 10 in Richtung des Pfeiles 24 passend bewegt wird. Diese Annäherung bedarf einer entsprechenden Kontrolle, um eine unkontrollierte Berührung zwischen der Probe 22 und der Messerschneide 14 des Schneidmessers 10 zu vermeiden. Hierzu ist die Begrenzungseinrichtung 20 vorgesehen, die in der Nachbarschaft der Rückenfläche 18 des Schneidmessers 10 lokalisiert ist.

Die grobe Zustellung der dünnzuschneidenden Probe 22 mit Hilfe der Antriebseinrichtung 50 erfolgt hierbei in der vom Endschalter 58 entfernten unteren Position der Probe 22 bzw. der (nicht gezeichneten) Probenhalterung.

Während dieser Annäherung der Probe 22 an das Schneidmesser 10 befindet sich die Auslösefahne 30 in ihrer ersten Winkelendstellung 40. Diese erste Winkelendstellung 40 wird durch den Elektromagneten 38 bewirkt, der zu diesem Zweck am zweiten Hebelarm 34 zieht. Gleichzeitig ist in dieser ersten Winkelendstellung 40 mit Hilfe des zweiten Hebelarms 34 der elektrische Schalter 36 betätigt, so daß der Schalter 36 an die elektronische Steuerung 44 ein entsprechendes Signal abgibt. Durch dieses Signal wird mittels der elektronischen Steuerung 44 die Antriebseinrichtung 50 derartig aktiviert, daß mit Hilfe der Antriebseinrichtung 50 die Probenhalterung mit der an ihr fixierten dünnzuschneidenden Probe 22 in Richtung des Pfeiles 24 zum Schneidmesser 10 hin bewegt wird. Dieser Vorschub-Antrieb erfolgt so lange, bis die dünnzuschneidende Probe 22 die Auslösefahne 30 bzw. deren ersten Hebelarm 32 berührt und den ersten Hebelarm 32 der Auslösefahne 30 um die Schwenkachse 28 (in Fig. 1 im entgegengesetzten Uhrzeigersinn) verschwenkt. Die Begrenzungseinrichtung 20 ist dabei derartig justiert, daß bei Erreichen der genau senkrechten Lage des ersten Hebelarmes 32, die durch die Messerschneide 14 und durch die Schnittbewegung (Pfeil 54) festgelegt ist, der elektrische Schalter 36 in seine zweite Schaltstellung umgeschaltet wird. Hierbei wird ein elektrisches Signal erzeugt, das über die elektronische Steuerung 44 die Antriebseinrichtung 50 abschaltet. Danach oder gleichzeitig wird über die elektronische Steuerung 44 auch der Elektromagnet 38 derartig aktiviert, daß er seine entgegengesetzte Schaltstellung einnimmt. Hierbei wird die Auslösefahne 30 um die Schwenkachse 28 herum (in Fig. 1 im entgegengesetzten Uhrzeigersinn) weiter verschwenkt, bis ihr erster Hebelarm 32 an der Rückenfläche 18 des Schneidmessers 10 anliegt, was der zweiten Winkelendstellung 42 der Auslösefahne 30 entspricht. Durch diese zweite Winkelendstellung 42 der Auslösefahne 30 wird gewährleistet, daß bei der Durchführung weiterer Dünnschnitte zwischen der dünnzuschneidenden Probe 22 und der Auslösefahne 30 der Begrenzungseinrichtung 20 keine Berührung stattfindet.

Sobald die Auslösefahne 30 in die zweite Winkelendstellung 42 umgestellt ist, wird die dünnzuschneidende Probe 22 nach der Durchführung der in Richtung des Pfeiles 24 erfolgenden groben Zustellbewegung mit Hilfe der Antriebseinrichtung 50 in ihre obere Position bewegt, was durch den Pfeil 56 angedeutet ist. In dieser oberen Position wird der Endschalter 58 betätigt, wodurch dann die elektronische Steuerung 44 derartig ausgelöst wird, daß erneut eine Aktivierung der Antriebseinrichtung 50 in der Weise stattfindet, daß der sich aus der Justierung der Auslösefahne 30 ergebende bekannte Restweg zwischen der dünnzuschneidenden Probe 22 und der Schneidkante 14 zurückgelegt wird. Danach kann dann ein entsprechender Dünnschnitt, d.h. eine Bewegung der dünnzuschneidenden Probe 22 in der durch den Pfeil 54 gegebenen ersten Raumrichtung erfolgen.

Nach der Durchführung einer bestimmten Dünnschnitt-Arbeit wird die Probenhalterung in ihre Ausgangsstellung (zur Richtung des Pfeiles 24 in Fig. 1 entgegengesetzt) zurückgestellt. Hierbei wird bspw. mittels eines mit dem Elektromagneten 38 zusammenwirkenden Federelementes die Auslösefahne 30 in ihre erste Winkelendstellung 40 zurückgestellt.

## Patentansprüche

1. Mikrotom mit einer Probenhalterung für eine dünnzuschneidende Probe (22) und mit einer Messerhalterung (12) für ein Schneidmesser (10), wobei die Probenhalterung zur Durchführung einer Schnittbewegung (Pfeil 54) relativ zur Messerhalterung (12) in einer ersten Raumrichtung und zur Durchführung einer Grob- und einer Schnittdicken-Zustellbewegung (Pfeil 24) in einer zur ersten Raumrichtung senkrechten zweiten Raumrichtung mittels einer elektrischen Antriebseinrichtung (50) antreibbar ist, und zur definierten Begrenzung der in der zweiten Raumrichtung erfolgenden Grob-Zustellbewegung der Probenhalterung eine Begrenzungseinrichtung (20) vorgesehen ist, die über eine elektronische Steuerung (44) mit der Antriebseinrichtung (50) verbunden ist,
**dadurch gekennzeichnet,**
daß die Begrenzungseinrichtung (20) in der Nachbarschaft des Messerhalters (121) bzw. des Schneidmessers (10) vorgesehen ist und einen Grundkörper (26) aufweist, an dem eine Auslösefahne (30) zwischen zwei Winkelendstellungen (40, 42) schwenkbeweglich gelagert ist, die zum Betätigen eines im Grundkörper (26) angeordneten Schalters (36) vorgesehen ist, der mit der elektronischen Steuerung (44) verbunden ist, wobei in der vom Schneidmesser (10) entfernten ersten Winkelendstellung (40) mittels des Schalters (36) über die elektronische Steuerung (44) die Antriebseinrichtung (50) zum Antrieb der Probenhalterung in der zweiten Raumrichtung (Pfeil 24) aktiviert ist.

2. Mikrotom nach Anspruch 1,
**dadurch gekennzeichnet,**
daß die Auslösefahne (30) derart justiert ist, daß bei Berührung der Auslösefahne (30) mit der Dünnschnittprobe (22) und bei Erreichen einer zwischen den beiden Winkelendstellungen (40, 42) vorgesehenen Winkel zwischenstellung, in der die Auslösefahne (30) zur Schnittebene parallel orientiert ist, der Schalter (36) in eine zweite Schaltstellung umschaltet, in der über die elektronische Steuerung (44) die Antriebseinrichtung (50) deaktiviert ist.

3. Mikrotom nach Anspruch 1 oder 2,
**dadurch gekennzeichnet,**
daß der Schalter (36) eine elektrischer Mikroschalter ist.

4. Mikrotom nach einem der Ansprüche 1 bis 3,
**dadurch gekennzeichnet,**
daß die Auslösefahne (30) mit einem im Grundkörper (26) angeordneten Elektromagneten (38) verbunden ist, der mit der elektronischen Steuerung (44) zusammengeschaltet ist, wobei der Elektromagnet (38) die Anschlußfahne (30) bis zur Berührung zwischen Dünnschnittprobe (22) und Auslösefahne (30) in der ersten Winkelendstellung (40) hält, und in der Winkelzwischenstellung der Elektromagnet (38) die Auslösefahne (30) in die zweite Winkelendstellung (42) umstellt, so daß die Auslösefahne (30) an der Rückenfläche (18) des Schneidmessers (10) anliegt.

5. Mikrotom nach Anspruch 4,
**dadurch gekennzeichnet,**
daß der Elektromagnet (38) ein Miniaturelektromagnet ist.

6. Mikrotom nach einem der vorhergehenden Ansprüche,
**dadurch gekennzeichnet,**
daß die elektronische Steuerung (44) mit einem zum Erfassen einer Schnittbewegungsumkehr vorgesehenen und durch die Probenhalterung betätigbaren Endschalter (58) zusammengeschaltet ist.

7. Mikrotom nach Anspruch 6,
**dadurch gekennzeichnet,**
daß der Endschalter (58) derart angeordnet ist, daß er von der Probenhalterung in deren Umkehrposition vor der Durchführung einer Schnittbewegung (Pfeil 54) betätigt wird.

8. Mikrotom nach einem der vorhergehenden Ansprüche,
**dadurch gekennzeichnet,**
daß die Begrenzungseinrichtung (20) derart angeordnet ist, daß sie von der dünnzuschneidenden Probe (22) in ihrer Umkehrposition vor der Durchführung einer zur Schnittbewegung (Pfeil 54) entgegengesetzten Rückstellbewegung (Pfeil 56) betätigt wird.

## Claims

1. A microtome with a specimen holder for a specimen (22) to be thinly cut and with a knife mounting (12) for a cutting knife (10), in which arrangement the specimen holder can be driven in a first spatial direction for performing a cutting movement (arrow 54) relative to the knife mounting (12), and in a second spatial direction perpendicular to the first spatial direction for performing a rough feeding movement and a movement for setting the depth of cut (arrow 24), by means of an electric drive device (50), and a delimiting device (20) is provided for the defined delimitation of the rough feeding movement of the specimen holder effected in the second spatial direction, which device is connected to the drive device (50) via an electronic control (44),
characterized in that
the delimiting device (20) is provided in the vicinity of the knife holder (121) or of the cutting knife (10) and has a base body (26) whereon there is mounted a tripping plate (30) for a pivoting movement between two angular end positions (40, 42), which plate is provided for actuating a switch (36) arranged in the base body (26), which switch is connected to the electronic control unit (44), in which arrangement the drive device (50) is activated in the first angular end position (40) remote from the cutting knife (10), by means of the switch (36) via the electronic control unit (44) for driving the specimen holder in the second spatial direction (arrow 24).

2. A microtome according to claim 1,
characterized in that
the tripping plate (30) is adjusted in such a way that on contact of the tripping plate (30) with the thin section specimen (22) and on reaching an intermediate angular position between the two angular end positions (40, 42), wherein the tripping plate (30) is orientated parallel to the plane of cut, the switch (36) switches over into a second switch position wherein the drive device (50) is deactivated by means of the electronic control unit (44).

3. A microtome according to claim 1 or 2,
characterized in that
the switch (36) is an electric microswitch.

4. A microtome according to one of claims 1 to 3,
characterized in that
the tripping plate (30) is connected to an electromagnet (38) arranged in the base body (26), which magnet is coupled with the electronic control unit (44), in which arrangement the electromagnet (38) holds the contact plate (30) in the first angular end position (40) until there is contact between the thin section specimen (22) and the tripping plate (30), and in the intermediate angular position the electromagnet (38) changes the tripping plate (30) over into the second angular end position (42), so that the tripping plate (30) bears on the rear face (18) of the cutting knife (10).

5. A microtome according to claim 4,
characterized in that
the electromagnet (38) is a miniature electromagnet.

6. A microtome according to one of the preceding claims,
characterized in that
the electronic control unit (44) is coupled with a limit switch (58) provided for registering a reversal of the cutting movement and which is actuable by the specimen holder.

7. A microtome according to claim 6,
characterized in that
the limit switch (58) is arranged in such a way that it is actuated by the specimen holder in its reversal position before the execution of a cutting movement (arrow 54).

8. A microtome according to one of the preceding claims,
characterized in that
the limiting device (20) is arranged in such a way that it is actuated by the specimen (22) to be thinly cut in its reversal position before the execution of a restoring movement (arrow 56) in the opposite direction to the cutting movement (arrow 54).

## Revendications

1. Microtome, comprenant un porte-échantillon pour un échantillon (22) à découper finement et un porte-lame (12) destiné à une lame de coupe (10), le porte-échantillon pouvant être entraîné, au moyen d'un dispositif d'entraînement électrique (50), dans une première direction spatiale, pour l'exécution d'un mouvement de coupe (flèche 54) par rapport au porte-lame (12), et dans une seconde direction spatiale perpendiculaire à la première direction spatiale, pour l'exécution d'un mouvement de réglage grossier et d'épaisseur de coupe (flèche 24) et, en vue d'une délimitation définie du mouvement de réglage grossier s'effectuant dans la seconde direction spatiale, un dispositif de délimitation (20) étant prévu, lequel est relié au dispositif d'entraînement (50) par l'intermédiaire d'une commande électronique (44), **caractérisé** en ce que le dispositif de délimitation (20) est prévu à proximité du porte-lame (121), ou de la lame de coupe (10) et présente un corps de base (26) sur lequel est logée, de manière à pivoter entre deux positions angulaires de fin de course (40, 42), une barrette de déclenchement (30) qui est prévue pour l'actionnement d'un interrupteur (36) agencé dans le corps de base (26), qui est relié à la commande électronique (44), moyennant quoi dans la première position angulaire de fin de course (40), éloignée de la lame de coupe (10), le dispositif d'entraînement (50) est activé au moyen de l'interrupteur (36) par l'intermédiaire de la commande électronique (44) afin d'entraîner le porte-échantillon dans la seconde direction spatiale (flèche 24).

2. Microtome selon la revendication 1, **caractérisé** en ce que la barrette de déclenchement (30) est ajustée de telle manière que lors de l'entrée en contact de la barrette de déclenchement (30) avec l'échantillon de coupe mince (22) et de l'arrivée à une position angulaire intermédiaire prévue entre les deux positions angulaires de fin de course (40, 42), dans laquelle la barrette de déclenchement (30) est orientée parallèlement au plan de coupe, l'interrupteur (36) est commuté dans une seconde position de commutation dans laquelle le dispositif d'entraînement (50) est désactivé par l'intermédiaire de la commande électronique (44).

3. Microtome selon la revendication 1 ou 2 **caractérisé** en ce que l'interrupteur (36) est un microrupteur électrique.

4. Microtome selon l'une des revendications 1 à 3, **caractérisé** en ce que la barrette de déclenchement (30) est reliée à un électroaimant (38) agencé dans le corps de base (26), qui est interconnecté avec la commande électronique (44), si bien que l'électroaimant (38) maintient la barrette de connexion (30) dans la première position angulaire de fin de course (40) jusqu'à l'entrée en contact de l'échantillon de coupe mince (22) avec la barrette de déclenchement (30) et, dans la position angulaire intermédiaire, l'électroaimant (38) commute la barrette de déclenchement (30) dans la seconde position angulaire de fin de course (42), de telle sorte que la barrette de déclenchement (30) s'applique contre la face arrière (18) de la lame de coupe (10).

5. Microtome selon la revendication 4, **caractérisé** en ce que l'électroaimant (38) est un électroaimant miniature.

6. Microtome selon l'une des revendications précédentes, **caractérisé** en ce que la commande électronique (44) est interconnectée avec un interrupteur de fin de course (58) pouvant être actionné par le porte-échantillon et prévu pour détecter une inversion du mouvement de coupe.

7. Microtome selon la revendication 6, **caractérisé** en ce que l'interrupteur de fin de course (58) est agencé de manière à être actionné par le porte-échantillon, quand celui-ci est en position d'inversion, avant l'exécution d'un mouvement de coupe (flèche 54).

8. Microtome selon l'une des revendications précédentes, **caractérisé** en ce que le dispositif de limitation (20) est agencé de manière à être actionné par l'échantillon à couper finement (22), dans sa position d'inversion, avant l'exécution d'un mouvement de rappel (flèche 56) opposé au mouvement de coupe (flèche 54).
